# EUROPÄISCHE PATENTSCHRIFT

(11) **EP 3 114 972 B1**
(45) Veröffentlichungstag und Bekanntmachung des Hinweises auf die Patenterteilung: **23.08.2017**
(21) Anmeldenummer: 15176167.3
(22) Anmeldetag: 09.07.2015
(51) Int. Cl.: A47J 31/54, A47J 31/56

(54) **GETRÄNKEZUBEREITUNGSMASCHINE**
BEVERAGE PREPARATION MACHINE
MACHINE DE PRÉPARATION DE BOISSONS

(43) Veröffentlichungstag der Anmeldung: 11.01.2017
(73) Patentinhaber: Qbo Coffee GmbH, 8304 Wallisellen (CH)
(72) Erfinder: Tiedemann, Thorsten, 25462 Rellingen (DE); Ternité, Rüdiger, 21149 Hamburg (DE)
(74) Vertreter: Frei Patent Attorneys

(56) Entgegenhaltungen:
- EP-A1- 0 935 938
- WO-A2-2014/195842
- US-A1- 2006 096 465

## Beschreibung

Die Erfindung betrifft Getränkezubereitungsmaschinen zum Zubereiten von Getränken oder dergleichen aus einer Portionspackung mit einer Portionsverpackung (bspw. Kapsel) und einem in der Portionsverpackung enthaltenen Extraktionsgut (bspw. Kaffee). Sie betrifft insbesondere eine Getränkezubereitungsmaschine und ein Verfahren zum Betreiben einer Getränkezubereitungsmaschine.

Getränkezubereitungsmaschinen zum Zubereiten von Getränken oder dergleichen aus einem in einer Portionsverpackung vorhandenen Extraktionsgut sind beispielsweise als Kaffee- oder Espressomaschinen bekannt. In vielen entsprechenden Systemen sind die Portionsverpackungen als Kapseln ausgebildet, in denen das Extraktionsgut bspw. luftdicht abgeschlossen ist. Für die Extraktion wird die Kapsel angestochen, beispielsweise an zwei einander gegenüberliegenden Seiten. Auf der ersten Seite wird dann eine Extraktionsflüssigkeit - im Allgemeinen heisses Wasser - eingeleitet. Auf der zweiten Seite wird das Extraktionsprodukt aus der Kapsel ausgeleitet. Dies geschieht in einem sogenannten Brühmodul. Ein solches weist eine Brühkammer auf, in der die Kapsel für den Brühprozess aufgenommen wird. Nebst Kapseln sind auch sogenannte "Pads" bekannt, bei denen die Portionsverpackung aus Wasserdurchlässigem Filterpapier besteht, und die daher nicht notwendigerweise angestochen werden müssen.

Getränkezubereitungsmaschinen der hier diskutierten Art weisen nebst einem Wassertank und einer Pumpe ein Wassererhitzungsmittel (Durchlauferhitzer oder eventuell Boiler) auf. Vom Wassererhitzungsmittel gelangt das Wasser in die Brühkammer, wo der Brühprozess stattfindet.

Die Qualität des im Brühprozess erzeugten Brühgetränks hängt kritisch von der Brühtemperatur ab. Die Temperatur ausgangsseitig des Wassererhitzungsmittels lässt sich zu diesem Zweck präzise regeln. Trotzdem werden in der Praxis oft schwankende Brühtemperaturen und als Folge davon eine schwankende Qualität des Brühgetränks beobachtet. Ein wichtiger Grund dafür mag folgendes Problem sein: Wenn die Maschine längere Zeit nicht gebraucht wurde, sind die Elemente der Brühkammer abgekühlt. Wenn dann ein Getränk gebrüht wird, insbesondere ein Getränk mit kleinem Volumen (bspw. Espresso oder Ristretto), kühlt sich als Folge auch das Getränk auf dem Weg durch die Brühkammer etwas ab.

Die EP 0 935 938 lehrt vor diesem Hintergrund eine Espressomaschine mit elektrischem Heizelement und mit Regelkreis um die Temperatur im Heizelement zu regeln. Um einer Abkühlung des Getränks unter einer gewünschten Getränketemperatur im Falle einer ersten Brühung nach Einschalten der Espressomaschine vorzubeugen, wird vorgeschlagen, die Solltemperatur des Heizelements von der Ausgangstemperatur des Heizelements (Thermoblocks) abhängig zu machen. Beispielsweise kann, wenn die Ausgangstemperatur der Raumtemperatur entspricht, die Solltemperatur ca. 10° höher sein als wenn das Heizelement bereits heiss war, damit das Getränk letztlich dieselbe Temperatur aufweist. Diese Lösung bringt jedoch mit sich, dass die Temperatur des Wassers beim ersten Kontakt mit dem Extraktionsgut (Kaffeepulver) nicht immer gleich ist, was einen Einfluss auf Getränkeeigenschaften wie Aroma etc. hat. Bei auf die Brühtemperatur abgestimmten Aromaeigenschaften kann das nachteilig sein, und das geschilderte Problem der schwankenden Getränkequalität wird daher nicht gelöst.

WO 2014/195842 betrifft eine Kaffeemaschine, bei welcher die Durchflussrate durch einen Durchlauferhitzer so in Abhängigkeit von dessen Temperatur geregelt wird, dass die Temperatur auf dessen Ausgangsseite einem vorgegebenen Wert entspricht. Für die eingangs geschilderte Problematik stellt das jedoch keine Lösung dar.

Es ist Aufgabe der Erfindung, eine Getränkezubereitungsmaschine zur Verfügung zu stellen, welche Nachteile des Standes der Technik überwindet, und welche insbesondere eine möglichst gleichbleibende Brüh- und Getränketemperatur unabhängig von der Vorgeschichte gewährleistet. Bevorzugt sollte die Getränkezubereitungsmaschine einen möglichst ressourcenschonenden Betrieb ermöglichen und einer in der Bedienung und Handhabung für den Konsumenten komfortablen Lösung nicht im Wege stehen.

Gemäss einem Aspekt der Erfindung wird eine Getränkezubereitungsmaschine zur Zubereitung von Brühgetränken aus einer Portionspackung mit in einer Portionsverpackung vorhandenem Extraktionsgut zur Verfügung gestellt. Die Getränkezubereitungsmaschine weist einen Wassertank, eine Pumpe, ein Wassererhitzungsmittel und eine Brühkammer zur Aufnahme der Portionspackung auf, wobei die Pumpe eingerichtet ist, Wasser über einen Flüssigkeitspfad vom Wassertank via das Wassererhitzungsmittel in die Brühkammer zu fördern. Sie zeichnet sich durch mindestens einen Temperatursensor zum Messen einer Temperatur entlang des Flüssigkeitspfads (am Ort der Flüssigkeitserhitzungsmittels oder einem diesen nachgeschalteten Ort) aus, sowie dadurch dass sie eingerichtet ist, mindestens in einem (bspw. einstellbaren oder bei jedem Betrieb eingenommenen) Betriebszustand nach einem Einschalt- oder Aufweckvorgang und vor einem eventuellen Aufheizungsvorgang des Wassererhitzungsmittels eine Anfangstemperatur am Ort des Temperatursensors zu messen und, nachdem das Wassererhitzungsmittel eine Betriebstemperatur erreicht hat einen Spülvorgang der Brühkammer mit Wasser aus dem Wassererhitzungsmittel durchzuführen, und zwar dann und nur dann, wenn die gemessene Anfangstemperatur einer bestimmten Bedingung entspricht. Erst anschliessend an einen solchen eventuellen Spülvorgang wird ein Einbringen der Portionspackung in die Brühkammer bewirkt.

Die Bedingung, welcher die Anfangstemperatur entsprechen muss, damit ein Spülvorgang durchgeführt wird, kann insbesondere das Unterschreiten eines festen Schwellwerts sein. Es hat sich gezeigt, dass ein Schwellwert von zwischen 30° und 60°C, insbesondere zwischen 35°C und 50°C für diesen Zweck günstig ist. Der optimale Schwellwert hängt von den Umständen ab, bspw. der Gesamtwärmekapazität des - wassergefüllten - Wassererhitzungsmittels im Vergleich zur Gesamtwärmekapazität der Brühkammerteile, von den entsprechenden Wärmeleitfähigkeitseigenschaften etc. Er kann für einen bestimmten Getränkezubereitungsmaschinentyp durch numerische Berechnungen und/oder experimentell bestimmt werden und dann durch die Software oder eventuell gar Hardware (bspw. in Form eines Bimetallschalters) der Getränkezubereitungsmaschine vorgegeben sein. Es ist auch nicht ausgeschlossen, dass er durch den Benutzer oder durch Wartungspersonal beeinflussbar ist.

Anstelle eines festen Schwellwerts sind auch andere Bedingungen denkbar, bspw. ein von Umständen (beispielsweise einer voreingestellten Flüssigkeitsmenge) abhängiger Schwellwert, wobei bei kleinen voreingestellten Flüssigkeitsmengen schon bei höheren Temperaturen eine Spülung vorgenommen wird als bei tieferen Temperaturen.

Die Getränkezubereitungsmaschine kann eingerichtet sein, den anfangstemperaturabhängigen Spülvorgang nach jedem Aufweckvorgang (und eventuell Einschaltvorgang) durchzuführen, oder wenn die Maschine in einem vom Benutzer wählbaren Betriebszustand ist (bspw. "automatischer Standby" oder "Espresso/Ristretto", etc.).

Ein Aufweckvorgang kann insbesondere ein Aufwecken aus einem Standby-Modus, in welchem dem Wassererhitzungsmittel keine Energie zugeführt wird, beinhalten. Dabei kann das Vorgehen mit einem abhängig von der gemessenen Anfangstemperatur durchgeführten oder nicht durchgeführten Spülvorgang nur nach einem Aufweckvorgang (aus dem Standby-Modus) oder sowohl nach einem Einschalt- und einem Aufweckvorgang vorgesehen sein. Im ersten Fall (nur nach dem Aufweckvorgang) kann bspw. vorgesehen sein, dass nach einem Einschaltvorgang immer, unabhängig von der Anfangstemperatur, ein Spülvorgang erfolgt.

Das erfindungsgemässe Vorgehen wird beispielsweise an einen automatischen Standby-Betrieb gekoppelt, bei welchem die Getränkezubereitungsmaschine nach Erfüllen einer vorgegebenen Bedingung in den Standby-Modus übergeht, bspw. nach einer gewissen Zeitspanne ohne Brühung, beispielsweise von einer Minute oder von einigen wenigen Minuten. Im Zusammenhang mit einem solchen automatischen Standby-Betrieb ist das erfindungsgemässe Vorgehen sogar speziell vorteilhaft, kann es doch die Vorteile des Standby-Modus, insbesondere wenn dieser schon nach kurzer Zeit eingenommen wird, in Bezug auf das Energiesparen nutzen, ohne den Bedienkomfort und die Getränkequalität wesentlich zu beeinträchtigen.

Ein weiterer Energiespareffekt des erfindungsgemässen Vorgehens wird dadurch erzielt, dass der Spülvorgang nicht jedes Mal stattfindet, sondern eben nur dann, wenn die vorgegebene Bedingung erfüllt ist, also wenn geschätzt wird, dass die Brühkammer zu wenig warm ist.

Das Einbringen der Portionspackung in die Brühkammer kann bspw. bewirkt werden, indem:
- eine in einer Zwischenposition - bspw. Kapselerkennungsposition - oder eventuell in einem Speicher gehaltene Portionspackung in die Brühkammer gefördert wird oder ein Fallen der in der Zwischenposition gehaltenen Portionspackung in die Brühkammer ermöglicht wird;
- der Benutzer aufgefordert wird, jetzt (wenn die gemessene Anfangstemperatur unter dem Schwellwert lag erst nach dem Spülvorgang, sonst bspw. sofort nach dem Einschalt- oder Aufweckvorgang oder nach dem Aufheizen) eine Portionspackung einzulegen;
- Ein Einlegen der Portionspackung freigegeben wird, ggf. gekoppelt an ein entsprechendes Signal an den Benutzer, nachdem es vorher verhindert worden war, bis der Spülvorgang ggf. beendet ist, bspw. durch Verriegelung einer Einwurföffnung.

Die Erfindung beruht auf der Erkenntnis, dass die schwankenden Brühtemperaturen und die ungleichen Temperaturen des fertigen Brühgetränks insbesondere davon abhängen, ob die Brühkammer selbst noch heiss ist oder nicht. Wenn es schon länger her ist, dass der letzte Brühprozess durchgeführt wurde, ist die Brühkammer unter Umständen bereits abgekühlt, und die erste Brühung führt zu einem unbefriedigenden Ergebnis. Diesem Umstand könnte begegnet werden, dass die Zeit bis zu einem Übergang in den Standby-Modus abhängig entsprechend gewählt ist (d.h. es dauert etwa so lange, bis in den Standby-Modus geschaltet wird, wie die Abkühlung der Brühkammer dauert), und/oder dass die Getränkezubereitungsmaschine programmiert ist, einen kurzen Spülvorgang mit heissem Wasser nach jedem Einschalt- oder Aufweckvorgang durchzuführen. Ersteres hat jedoch den Nachteil eines erhöhten Energieverbrauchs, und Zweiteres hat den Nachteil, dass unter Umständen praktisch vor jeder Brühung Spülvorgänge durchgeführt werden müssen, gerade wenn die Kaffeemaschine aus Energiespargründen nach Gebrauch jeweils rasch in den Standby-Modus geht. Das empfindet der Konsument als lästig und unnötig.

Dadurch, dass erfindungsgemäss eine Anfangstemperatur, ggf. vor dem Aufheizen gemessen wird, kann ein Übergang in einen Standby-Modus beliebig rasch durchgeführt werden, und trotzdem kann das Vorwärmen der Brühkammer durch den Spülvorgang bedürfnisgerecht erfolgen. Auch eventuelle Umwelteinflüsse - insbesondere eine Umgebungstemperatur - werden zwangslos berücksichtigt.

Der Temperatursensor ist insbesondre in einem oder an einem Element entlang des Flüssigkeitspfads angebracht, und zwar entweder im oder am Wassererhitzungsmittel oder an einem dem Wassererhitzungsmittel nachgeschalteten Element, bspw. der Flüssigkeitsleitung zur Brühkammer oder an einem Element der Brühkammer selbst. Es hat sich als unter Umständen besonders vorteilhaft herausgestellt, wenn der genannte Temperatursensor im oder am Wassererhitzungsmittel selbst angebracht ist. Dies erstens, weil dort in vielen Fällen ohnehin ein Temperatursensor vorhanden ist, der für die Regelung des Wassererhitzungsmittels gebraucht wird, und so kein zusätzlicher Hardwareaufwand betrieben werden muss. Zweitens besteht eine Korrelation zwischen der Temperatur der Teile der Brühkammer einerseits und der Temperatur des Wassererhitzungsmittels andererseits, und daher kann eine Messung am Ort des Wassererhitzungsmittels, wo sie einfacher ist als in der Brühkammer mit beweglichen und teilweise verschmutzungsanfälligen Teilen, gemacht werden und hat doch Aussagekraft. Es ist jedoch nicht ausgeschlossen, dass der Temperatursensor in direktem Kontakt mit der Brühkammer - bspw. dem Injektor, durch den heisses Wasser in die Portionspackung eingeleitet wird, angebracht wird.

Ebenfalls Gegenstand der Erfindung ist ein Verfahren zum Betreiben einer Getränkezubereitungsmaschine, insbesondere der vorstehend beschriebenen Art, mit folgenden Schritten:
- Anschliessend an ein Signal für ein Aufwachen aus dem Standby-Modus oder an ein Einschalten der Getränkezubereitungsmaschine, insbesondere durch Betätigen eines entsprechenden Bedienelements (Taster oder dergleichen) durch den Benutzer, Messen einer Temperatur entlang des Flüssigkeitspfads (insbesondere im oder am Wassererhitzungsmittel) als Anfangstemperatur,
- Nach dem Messen der Temperatur, Aufheizen des Wassers im Wassererhitzungsmittel auf eine Betriebstemperatur;
- Dann und nur dann, wenn die Anfangstemperatur unter einem Schwellwert liegt, Durchführen einer Spülung der Brühkammer mit aufgeheiztem Wasser aus dem Wassererhitzungsmittel;
- Einlegen der Portionspackung und Brühung des Brühgetränks.

Nachfolgend werden Ausführungsbeispiele der Erfindung anhand von Figuren beschrieben. In den Figuren bezeichnen gleiche Bezugszeichen gleiche oder analoge Elemente. Es zeigen:
- Fig. 1: eine Ansicht einer Kaffeemaschine als Beispiel einer erfindungsgemässen Getränkezubereitungsmaschine;
- Fig. 2-4: je ein Schema der Kaffeemaschine; und
- Fig. 5: ein Flussdiagramm des Verfahrens, auf dessen Durchführung die Getränkezubereitungsmaschine programmiert ist.

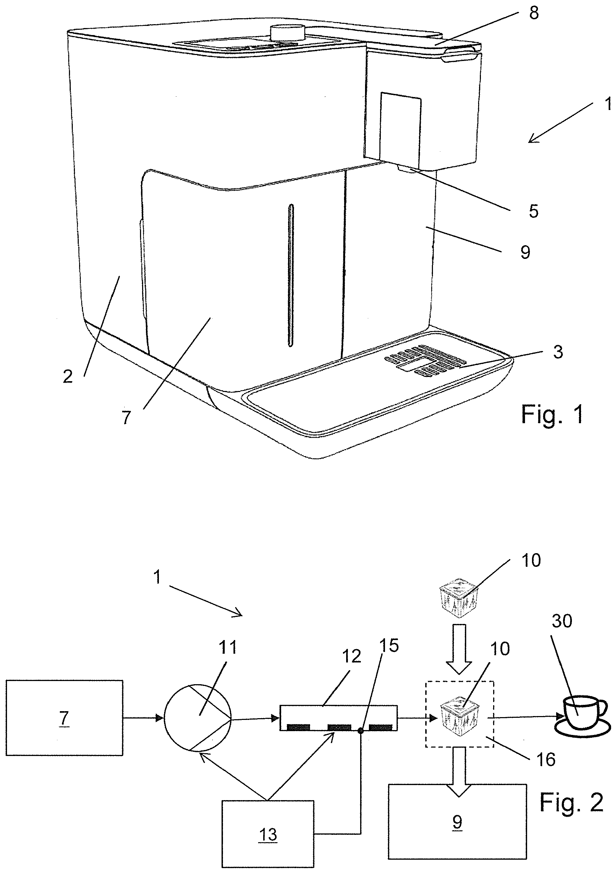

Die Getränkezubereitungsmaschine 1 gemäss **Figur 1** ist beispielsweise eine Portionskapsel-Kaffeemaschine der an sich bekannten Art mit horizontalem Brühmodul.

Sie weist nebst einem Gehäuse 2 eine Abstellfläche 3 für ein Trinkgefäss auf, hier mit Abtropfgitter und darunter liegendem (in der Figur abgedecktem) Auffangbehälter für Flüssigkeitstropfen. Über der Abstellfläche befindet sich ein Getränkeauslass 5 durch welchen ein Getränk, beispielsweise Kaffee in das Trinkgefäss gelangt. Ein Wasserbehälter 7 ist im dargestellten Ausführungsbeispiel für das Befüllen und Reinigen nach vorne hin abziehbar. Daneben befindet sich ein Auffangbehälter 9 für gebrauchte Getränkekapseln. In diesen gelangt eine Kapsel, nachdem sie für den Brühprozess in die im Innern der Getränkezubereitungsmaschine angeordnete Brühkammer gelangt ist und nach dem Brühprozess nach unten fällt, wie das an sich für Getränkezubereitungsmaschinen mit horizontalem Brühmodul bekannt ist.

In Fig. 1 sieht man auch einen Bedienhebel 8, durch welchen die Brühkammer geöffnet werden kann, wobei im in den Figuren dargestellten heruntergeklappten Zustand des Bedienhebels gleich auch eine Einwurföffnung zum Einwerfen der Kapsel in die Brühkammer oder Zwischenposition verdeckt wird.

**Figur 2** zeigt ein Schema einer solchen Getränkezubereitungsmaschine 1. Diese weist nebst dem Wassertank 7 eine Pumpe 11 zum Zuführen von Brühwasser zur Brühkammer und ein Wassererhitzungsmittel 12 (bspw. einen Durchlauferhitzer oder Boiler) auf. Eine Steuerung 13 ist eingerichtet, die Pumpe 11 und das Wassererhitzungsmittel 12 bedürfnisgerecht anzusteuern, wofür sie mit nicht dargestellten Benutzereingabemitteln in Verbindung steht. Weiter können in an sich bekannter Weise zusätzliche Elemente entlang des Flüssigkeitspfades angeordnet sein, bspw. ein Durchflussmesser; ein solcher ist bevorzugt dem Wassererhitzungsmittel vorgeschaltet.

Am Wassererhitzungsmittel ist ein Temperatursensor 15 angebracht (der Temperatursensor kann alternativ auch einen ins Innere des Wassererhitzungsmittels reichenden Fühler aufweisen, welcher direkt mit dem Wasser in Kontakt kommt). Die Steuerung 13 ist eingerichtet, den Temperatursensor auszulesen. Dies wird bspw. benutzt um die Temperatur des Wassererhitzungsmittels zu regeln. Zusätzlich wird der Temperatursensor 15 für das erfindungsgemässe Vorgehen benutzt, wie das nachstehend noch beschrieben wird.

Für den Normalbetrieb wird eine Portionskapsel 10, im gezeichneten Ausführungsbeispiel gemäss WO 2010/118543, wobei die Ausgestaltung der Kapsel jedoch keinen Einfluss auf das erfindungsgemässe Vorgehen hat, von oben in die Brühkammer 16 eingeworfen. Es kann vorgesehen sein, dass ein solcher Einwurf zunächst in eine Zwischenposition ausserhalb der Brühkammer erfolgt, beispielsweise wie in der europäischen Patentanmeldung EP 3 028 608 A1 beschrieben. In einer Zwischenposition kann optional ein Kapselerkennungsschritt durchgeführt werden. In einem solchen Fall erfolgt die Weitergabe der Kapsel in die Brühkammer 16 durch die Maschine gesteuert. Ergänzend oder alternativ können andere Mittel zum Beeinflussen des Zeitpunkts, in dem die Kapsel in die Brühkammer gelangt vorhanden sein. Solche andere Mittel können eine Sperrung des Einwurfs und/oder eine entsprechende Anzeige für den Benutzer, ggf. unterstützt von einer Farbcodierung, beinhalten.

In der Brühkammer 16 wird die Kapsel vom erhitzten, von der Pumpe geförderten Brühwasser durchströmt. Es ergibt sich aufgrund eines Extraktionsprozesses ein Brühgetränk, welches durch den Getränkeauslass in ein darunter auf der Abstellfläche abgestelltes Trinkgefäss 30 gelangt. Nach dem Brühprozess wird die Portionskapsel nach unten in den Auffangbehälter 9 ausgeworfen.

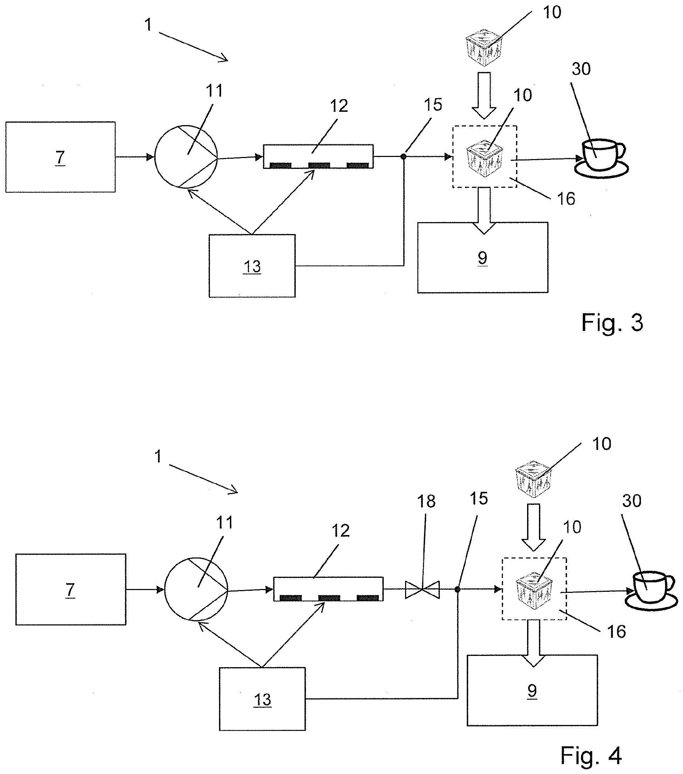

**Figur 3** zeigt ein Schema einer Getränkezubereitungsmaschine, bei welcher der für das hier beschriebene Vorgehen verwendete Temperatursensor nicht an den oder im Wassererhitzungsmittel 12, sondern an der oder in der Flüssigkeitsleitung angeordnet ist, welche dem Wassererhitzungsmittel nachgeschaltet ist.

Oft ist in Getränkezubereitungsmaschinen der hier beschriebenen Art zwischen dem Wassererhitzungsmittel 12 einerseits und er Brühkammer 16 andererseits mindestens ein Ventil 18 angeordnet, was schematisch anhand der Ausführungsform gemäss **Figur 4** dargestellt ist. Ein solches Ventil 18 kann bspw. unter anderem dazu dienen, das erhitzte Wasser wahlweise der Brühkammer oder einem anderen Flüssigkeitspfad zuzuführen, bspw. einem Heisswasseranschluss der Getränkezubereitungsmaschine, einem Dampfanschluss und/oder einem Reinigungspfad bspw. für ein hier nicht weiter beschriebenes Milchmodul.

Ein solches Ventil 18 kann den Effekt haben, dass es thermisch entkoppelnd oder - indem es Wärme abführen kann - kühlend wirkt. Für einen solchen Fall kann es in Ausführungsformen sinnvoll sein, wenn der Temperatursensor 15 dem Wassererhitzungsmittel nachgeschaltet angeordnet ist, was ebenfalls in Fig. 4 dargestellt ist.

Selbstverständlich sind auch Kombinationen möglich. Beispielsweise kann sowohl ein Temperatursensor im Wassererhitzungsmittel und/oder am Wassererhitzungsmittel als auch ein Temperatursensor am oder im Flüssigkeitspfad hinter dem Wassererhitzungsmittel, bspw. ggf. hinter einem Ventil, vorhanden sein. Die Steuerung kann dann eingerichtet sein, den Messwert von einem bestimmten der Temperatursensoren zu berücksichtigen, einen Wert zu berücksichtigen, der von einer Benutzereinstellung abhängt, oder einen Wert zu berücksichtigen, der sich durch eine Berechnung aus einer Kombination der verschiedenen gemessenen Werte ergibt.

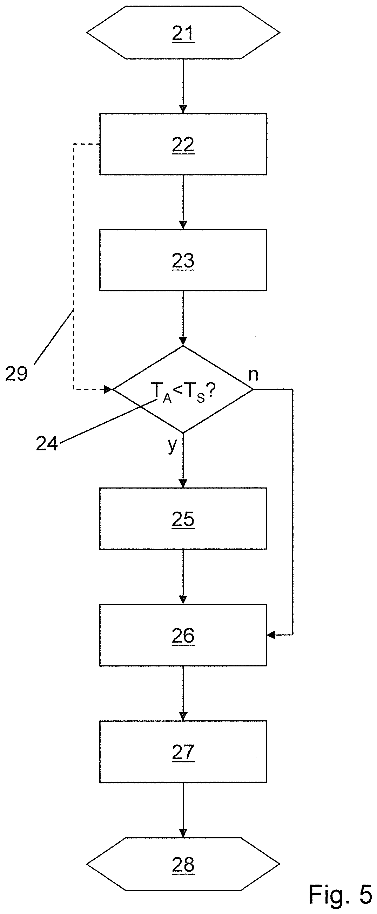

Die Getränkebereitungsmaschine ist eingerichtet, nach einer Initialisierung (insbesondere einem Aufwecken aus einem Standby-Modus) zunächst durch den Temperatursensor 15 eine Temperatur zu messen, um abzuschätzen, ob die Brühkammer noch genügend warm ist für einen Brühprozess. **Figur 5** zeigt schematisch die Schrittabfolge. Nach der Initialisierung 21 (Einschalten oder Aufwecken der Maschine durch den Benutzer) erfolgt eine Messung 22 der Anfangstemperatur T_{A} durch den Temperatursensor 15. Dann wird das Wassererhitzungsmittel 12 aufgeheizt. Anschliessend wird abhängig von der vorher gemessenen Anfangstemperatur T_{A} ein Spülvorgang 25 durgeführt oder nicht, wobei der Spülvorgang durchgeführt wird, wenn die Anfangstemperatur T_{A} kleiner als ein Schwellwert T_{S} von beispielsweise 40°C ist. In Fig. 5 bezeichnet das Bezugszeichen 24 den Verzweigungspunkt in der Schrittabfolge und der gestrichelte Pfeil 29 illustriert, dass in den Vergleich der im vorherigen Schritt (Messung 22) ermittelte Wert T_{A} eingeht.

Anschliessend an die Spülung - wenn eine solche durchgeführt wurde - oder an das Aufheizen erfolgt das Einlegen 26 der Portionspackung, insbesondere Kapsel, bspw. Kaffeekapsel. Wenn die Anfangstemperatur über dem Schwellwert liegt, kann das Einlegen der Portionspackung auch schon gleichzeitig zum Aufheizvorgang bewirkt werden. Dann findet wie an sich bekannt ein Brühvorgang 27 statt, und anschliessend endet das Verfahren (Beendigung 28), bspw. durch Auswerfen der Portionspackung in den Auffangbehälter 9.

Ergänzend kann die Getränkezubereitungsmaschine eingerichtet sein, den beschriebenen Vorgang (Messung, abhängig vom Messwert Durchführen der Spülung) auch dann vor einem Brühvorgang durchzuführen, wenn sie nicht vorher eingeschaltet oder aufgeweckt wurde.

## Patentansprüche

1. Getränkezubereitungsmaschine zur Zubereitung von Brühgetränken aus einem in einer Portionspackung (10) mit einem Extraktionsgut, aufweisend einen Wassertank (7), eine Pumpe (11) ein Wassererhitzungsmittel (12) und eine Brühkammer (16) zur Aufnahme der Portionspackung, wobei die Pumpe (11) eingerichtet ist, Wasser über einen Flüssigkeitspfad vom Wassertank (7) via das Wassererhitzungsmittel (12) in die Brühkammer (16) zu fördern, **gekennzeichnet durch** mindestens einen Temperatursensor (15) zum Messen einer Temperatur entlang des Flüssigkeitspfads, sowie **dadurch, dass** sie eingerichtet ist, mindestens in einem Betriebszustand nach einem Einschalt- oder Aufweckvorgang und vor einem eventuellen Aufheizungsvorgang des Wassererhitzungsmittels eine Anfangstemperatur (T_{A}) am Ort des Temperatursensors (15) zu messen und, nachdem das Wassererhitzungsmittel (12) eine Betriebstemperatur erreicht hat, dann und nur dann, wenn die gemessene Anfangstemperatur (T_{A}) einer bestimmten Bedingung entspricht, einen Spülvorgang der Brühkammer mit Wasser aus dem Wassererhitzungsmittel durchzuführen, und erst anschliessend ein Einbringen der Portionspackung in die Brühkammer zu bewirken.

2. Getränkezubereitungsmaschine nach Anspruch 1, wobei die Bedingung ein Unterschreiten eines Schwellwerts (T_{S}) durch die Anfangstemperatur (T_{A}) ist.

3. Getränkezubereitungsmaschine nach Anspruch 2, wobei der Schwellwert (T_{S}) ein vorgegebener Wert zwischen 35°C und 50°C ist.

4. Getränkezubereitungsmaschine nach Anspruch 2 oder 3, wobei der Schwellwert (T_{S}) abhängig von einem Betriebszustand ist.

5. Getränkezubereitungsmaschine nach einem der vorangehenden Ansprüche, die eingerichtet ist, nach einer vorgegebenen oder vorgebbaren Zeit automatisch in einen Standby-Modus zu wechseln, in welchem das Wassererhitzungsmittel (12) inaktiv ist, wobei der Aufweckvorgang ein Aufweckvorgang aus dem Standby-Modus ist.

6. Getränkezubereitungsmaschine nach einem der vorangehenden Ansprüche, wobei der Temperatursensor (15) im oder am Wassererhitzungsmittel (12) angebracht ist.

7. Getränkezubereitungsmaschine nach einem der Ansprüche 1-5, wobei der Temperatursensor (15) an einer dem Wassererhitzungsmittel (12) nachgeschalteten Flüssigkeitsleitung angebracht ist.

8. Getränkezubereitungsmaschine einem der vorangehenden Ansprüche, aufweisend ein zwischen dem Wassererhitzungsmittel (12) und der Brühkammer (16) angeordnetes Ventil (18), wobei der Temperatursensor (15) dem Ventil (18) nachgeschaltet angeordnet ist.

9. Verfahren zum Betreiben einer Getränkezubereitungsmaschine, insbesondere nach einem der vorangehenden Ansprüche, zur Zubereitung von Brühgetränken aus einem in einer Portionspackung (10) mit einem Extraktionsgut, aufweisend einen Wassertank (7), mit einer Pumpe (11) einem Wassererhitzungsmittel (12) und einer Brühkammer (16) zur Aufnahme der Portionspackung, wobei die Pumpe eingerichtet ist, Wasser über einen Flüssigkeitspfad vom Wassertank (7) via das Wassererhitzungsmittel (12) in die Brühkammer (16) zu fördern, insbesondere nach einem der vorangehenden Ansprüche, mit folgenden Schritten:
- Anschliessend an ein Aufwachen aus einem Standby-Modus oder an ein Einschalten der Getränkezubereitungsmaschine Messen einer Temperatur entlang des Flüssigkeitspfads als Anfangstemperatur,
- Nach dem Messen der Temperatur, Aufheizen des Wassers im Wassererhitzungsmittel auf eine Betriebstemperatur;
- Dann und nur dann, wenn die Anfangstemperatur unter einem Schwellwert liegt, Durchführen einer Spülung der Brühkammer mit aufgeheiztem Wasser aus dem Wassererhitzungsmittel; und
- Einlegen der Portionspackung (10) und Brühung des Brühgetränks.

## Claims

1. A drinks preparation machine for the preparation of brewed drinks from an extraction material contained in a portion package (10), comprising a water tank (7), a pump (11), a water heating means (12) and a brewing chamber (16) for receiving the portion package, wherein the pump (11) is designed to deliver water by way of a fluid path from the water tank (7) via the water heating means (12) into the brewing chamber (16), **characterised by** at least one temperature sensor (15) for measuring a temperature along the fluid path, as well as **characterised in that** the drinks preparation machine is designed to measure an initial temperature (T_{A}) at the location of the temperature sensor (15) at least in an operating condition after a switching-on procedure or wake-up procedure and before a possible heating procedure of the water heating means, and, after the water heating means (12) has reached an operating temperature, to carry out a rinsing procedure of the brewing chamber with water from the water heating means when and only when the measured initial temperature (T_{A}) corresponds to a certain condition, and only subsequently to effect an introduction of the portion package into the brewing chamber.

2. The drinks preparation machine according to claim 1, wherein the condition is a falling-short of a threshold value (T_{S}) by the initial temperature (T_{A}).

3. The drinks preparation machine according to claim 2, wherein the threshold value (T_{S}) is a predefined value between 35°C and 50°C.

4. The drinks preparation machine according to claim 2 or 3, wherein the threshold value (Ts) is dependent on an operating condition.

5. The drinks preparation machine according to any one of the preceding claims, which is designed to automatically switch into a standby mode after a predefined or a specifiable time, in which standby mode the water heating means (12) is inactive, wherein the wake-up procedure is a wake-up procedure from the standby mode.

6. The drinks preparation machine according to any one of the preceding claims, wherein the temperature sensor (15) is attached in or on the water heating means (12).

7. The drinks preparation machine according to any one of the claims 1-5, wherein the temperature sensor (15) is attached on a fluid conduit which is arranged downstream of the water heating means (12).

8. The drinks preparation machine according to any one of the preceding claims, comprising a valve (18) which is arranged between the water heating means (12) and the brewing chamber (16), wherein the temperature sensor (15) is arranged downstream of the valve (18).

9. A method for operating a drinks preparation machine, in particular according to one of the preceding claims, for preparing brewed drinks from an extraction material contained in a portion package (1), comprising a water tank (7), a pump (11), a water heating means (12) and a brewing chamber (16) for receiving the portion package, wherein the pump (11) is designed to deliver water by way of a fluid path from the water tank (7) via the water heating means (12) into the brewing chamber (16), in particular according to one of the preceding claims, with the following steps:
- measuring a temperature along the fluid path as an initial temperature, subsequently to a waking-up from a standby mode or subsequently to the switching-on of the drinks preparation machine,
- heating the water in the water heating means to an operating temperature, after the measuring of the temperature,
- carrying out a rinsing of the brewing chamber with heated water from the water heating means when and only when the initial temperature lies below a threshold value; and
- introducing the portion package (10) and brewing the drink to be brewed.

## Revendications

1. Machine de préparation de boissons servant à préparer des boissons infusées à partir d'un produit à extraire placé dans une portion emballée (10), la machine présentant
une cuve (7) à eau, une pompe (11), un moyen (12) de chauffage de l'eau et une chambre d'infusion (16) qui reprend la portion emballée,
la pompe (11) étant conçue pour refouler de l'eau dans la chambre d'infusion (16) par un parcours de liquide qui part de la cuve (7) à eau et traverse le moyen (12) de chauffage d'eau,
**caractérisée par**
au moins un capteur (15) de température qui mesure une température sur le parcours de liquide, et
**caractérisée en ce qu'**elle est conçue pour mesurer une température initiale (T_{A}) au niveau du capteur (15) de température au moins dans un état de fonctionnement qui suit une opération de branchement ou de réactivation et avant une éventuelle opération de chauffage par le moyen de chauffage d'eau et, après que le moyen (12) de chauffage d'eau a atteint une température de fonctionnement et uniquement si la température initiale (T_{A}) mesurée correspond à une condition définie, pour exécuter une opération de rinçage de la chambre d'infusion par de l'eau provenant du moyen de chauffage d'eau avant de réaliser l'introduction de la portion emballage dans la chambre d'infusion.

2. Machine de préparation de boissons selon la revendication 1, dans laquelle la condition est qu'une valeur de seuil (T_{S}) n'est pas atteinte par la température initiale (T_{A}).

3. Machine de préparation de boissons selon la revendication 2, dans laquelle la valeur de seuil (T_{S}) présente une valeur prédéterminée comprise entre 35°C et 50°C.

4. Machine de préparation de boissons selon les revendications 2 ou 3, dans laquelle la valeur de seuil (T_{S}) dépend d'un état de fonctionnement.

5. Machine de préparation de boissons selon l'une des revendications précédentes, conçue pour, après une durée prédéterminée ou apte à être prédéterminée, passer automatiquement en mode d'attente dans lequel le moyen (12) de chauffage d'eau est inactif, l'opération de réactivation étant une opération de réactivation hors du mode d'attente.

6. Machine de préparation de boissons selon l'une des revendications précédentes, dans laquelle le capteur (15) de température est appliqué dans ou sur le moyen (12) de chauffage d'eau.

7. Machine de préparation de boissons selon l'une des revendications 1 à 5, dans laquelle le capteur (15) de température est placé sur un conduit à liquide raccordé en aval du moyen (12) de chauffage d'eau.

8. Machine de préparation de boissons selon l'une des revendications précédentes, présentant une soupape (18) disposée entre le moyen (12) de chauffage d'eau et la chambre d'infusion (16), le capteur (15) de température étant disposé en aval de la soupape (18).

9. Procédé d'utilisation d'une machine de préparation de boisson, en particulier selon l'une des revendications précédentes, pour préparer des boissons infusées à partir d'un produit à extraire prévu dans une portion emballée (10), la machine présentant une cuve (7) à eau, une pompe (11), un moyen (12) de chauffage de l'eau et une chambre d'infusion (16) qui reprend la portion emballée, la pompe (11) étant conçue pour refouler de l'eau dans la chambre d'infusion (16) par un parcours de liquide qui part de la cuve (7) à eau et traverse le moyen (12) de chauffage d'eau, en particulier selon l'une des revendications précédentes, et présentant les étapes suivantes :
après une réactivation depuis un mode d'attente ou lors du branchement de la machine de préparation de boisson, mesure d'une température sur le parcours de liquide, en tant que température initiale,
après la mesure de la température, chauffage de l'eau présente dans le moyen de chauffage d'eau jusqu'à une température de fonctionnement,
uniquement si la température initiale est située en dessous d'une valeur de seuil, réalisation d'un rinçage de la chambre d'infusion avec de l'eau chauffée provenant du moyen de chauffage d'eau et
insertion de la portion emballée (10) et infusion de la boisson infusée.
